(19) Europäisches Patentamt
European Patent Office
Office européen des brevets

(11) EP 0 426 864 B1

(12) **EUROPEAN PATENT SPECIFICATION**

(45) Date of publication and mention
of the grant of the patent:
**02.07.1997 Bulletin 1997/27**

(21) Application number: **90905627.7**

(22) Date of filing: **28.03.1990**

(51) Int Cl.$^6$: **G11B 11/10**

(86) International application number:
**PCT/JP90/00412**

(87) International publication number:
**WO 90/11602 (04.10.1990 Gazette 1990/23)**

(54) **MAGNETOOPTICAL MEDIUM**

MAGNETOOPTISCHES MEDIUM

SUPPORT MAGNETO-OPTIQUE

(84) Designated Contracting States:
**DE FR GB NL**

(30) Priority: **28.03.1989 JP 76117/89**

(43) Date of publication of application:
**15.05.1991 Bulletin 1991/20**

(60) Divisional application: **96109282.296203114.2**

(73) Proprietor: **SEIKO EPSON CORPORATION
Shinjuku-ku Tokyo 163-08 (JP)**

(72) Inventors:
• **OOTSUKI, Shinya
Nagano-ken 392 (JP)**
• **KAWASE, Takeo
Nagano-ken 392 (JP)**
• **NEBASHI, Satoshi
Nagano-ken 392 (JP)**
• **MIYAZAWA, Hiromu
Nagano-ken 392 (JP)**

(74) Representative: **Sturt, Clifford Mark et al
J. MILLER & CO.
34 Bedford Row,
Holborn
London WC1R 4JH (GB)**

(56) References cited:
DE-A- 3 623 285          JP-A- 6 276 040
JP-A-62 197 939          JP-A-62 226 450
JP-A-63 171 449          JP-A-63 173 249
JP-A-63 317 945          US-A- 4 466 035

• JOURNAL OF APPLIED PHYSICS vol. 57, no. 8,
April 1985, WOODBURY, NY pages 3891 - 3893
C. GUEUGNON, P. BERNSTEIN AND R.
LEFEBVRE 'Computation of Optical Properties
of Multilayered Media for Magnetooptical
Memories'
• PATENT ABSTRACTS OF JAPAN vol. 12, no. 240
(P-727)8 July 1988 & JP-A-63 031 049

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a magneto-optical media for effecting the reading out signals by utilising the magneto-optical effect (Kerr effect).

In a conventional magneto-optical media, as can be seen in the disclosure of the Japanese Patent Application No. 27458/87, there has been consideration that, in the Kerr effect read-out system by utilising the reflected light from an magneto-optical media, the signal versus noise ratio (S/N ratio) is proportional to log ($\theta$ * R) (where $\theta$ denotes a Kerr rotation angle and R the rate of the reflected light), and the optimisation of the refractive index and the film thickness of each thin film layer has been carried out in view of the above-described S/N ratio, the protective characteristics, heat conducting characteristics, etc.

However, in a mass-produced magneto-optical head, since the phase difference between P polarised light and S polarised light has at worst the fluctuation of about $\pm$ 15 degrees, there is such a case that a suitable S/N ratio cannot be obtained in the case when the Kerr effect read-out has been carried out, in even a magneto-optical media designed most suitably by the conventional technology.

German Patent Application No. DE 3,623,285 discloses a magneto-optical recording medium comprising a protective layer consisting of SiN and a perpendicularly magnetised amorphous film made of an alloy of the formula $(R_{1-x} M_x)_a (Fe_{1-y}Co_y)_{100-a}$, wherein R is at least one of La, Ce, Pr, Nd, Sm, Ho, Er and Yb; M is at least one of Tb, Gd and Dy; $0 \leq x < 0.5$; $0 < y < 1$, and $10 \leq a \leq 40$. However, it does not address the aforementioned problem caused by the phase difference fluctuation. Alternative protective layers consisting of $SiO_2$ and AlSiN disclosed in Japanese Patent Application No. 63031049 and Journal of Applied Physics Vol 57, No. 8, April 1985, pp 3891-3893.

The present invention intends to solve such a mooted point as described above, and its object is to provide a magneto-optical media most suitably formed in such a manner that an S/N ratio sufficient to enable high density recording and reading at the temperature in a drive of practical use.

According to the present invention there is provided a magneto-optical medium as defined by Claim 1.

Embodiments of the present invention will now be described, by way of example, with reference to the accompanying drawings, in which:

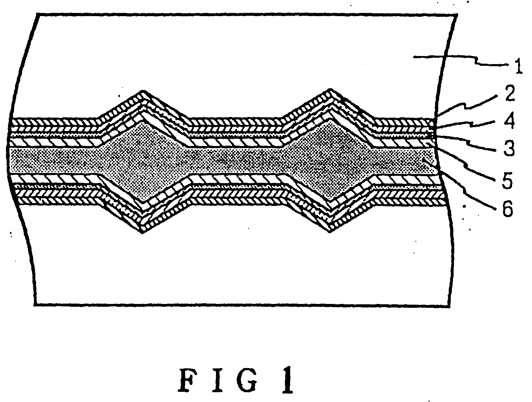

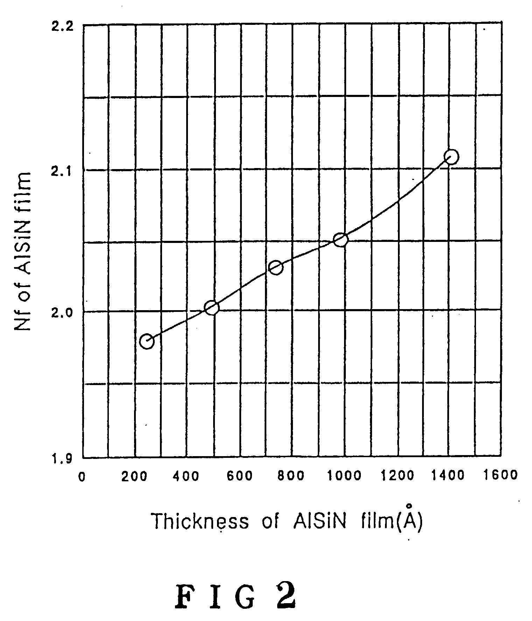

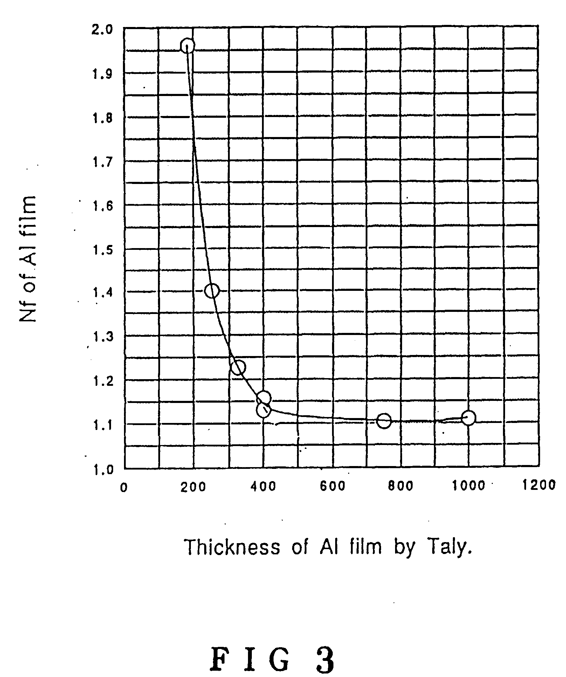

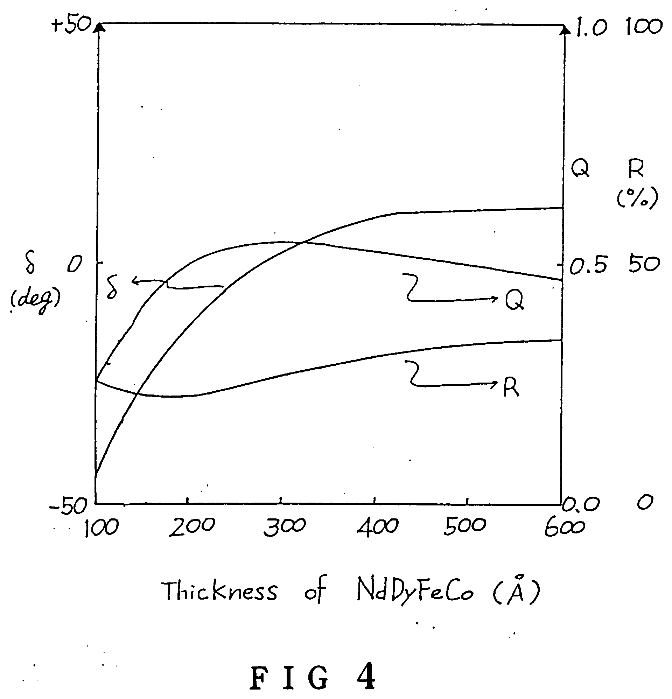

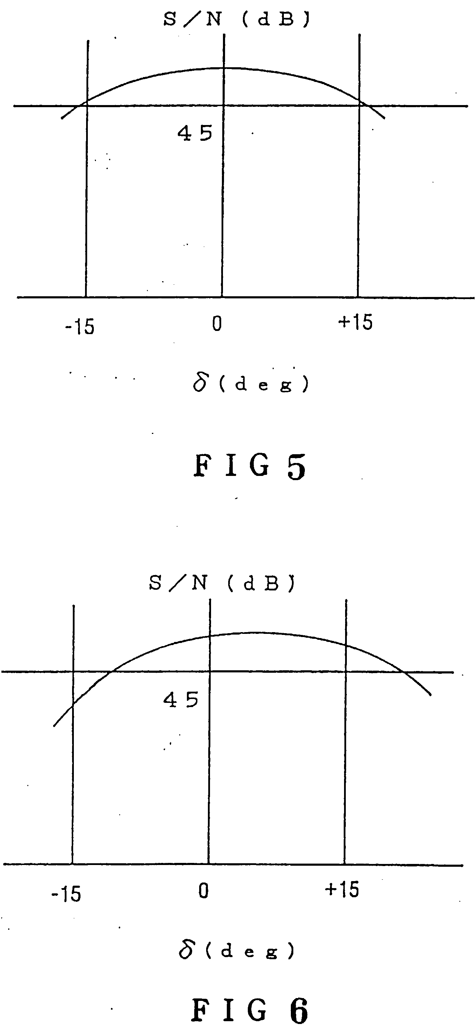

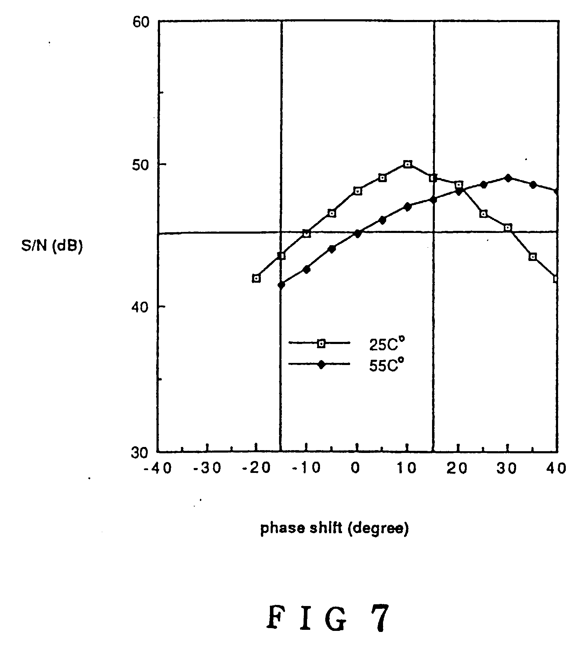

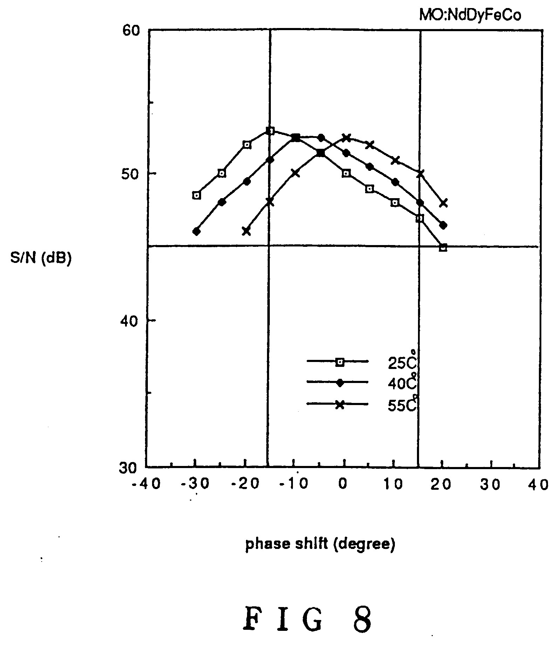

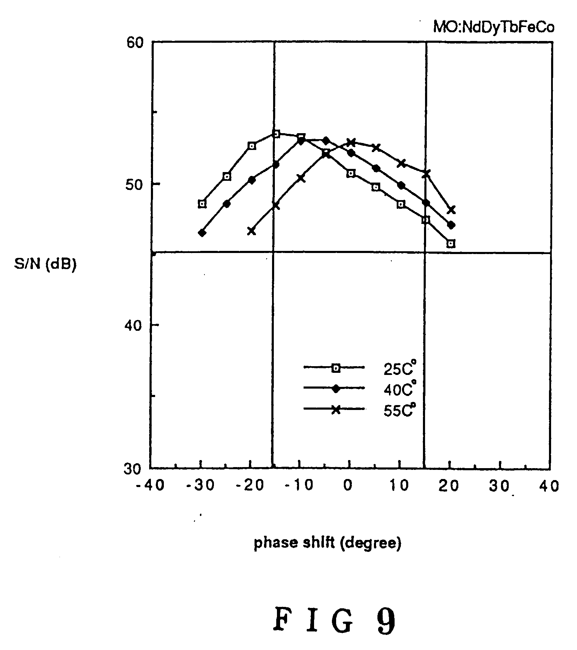

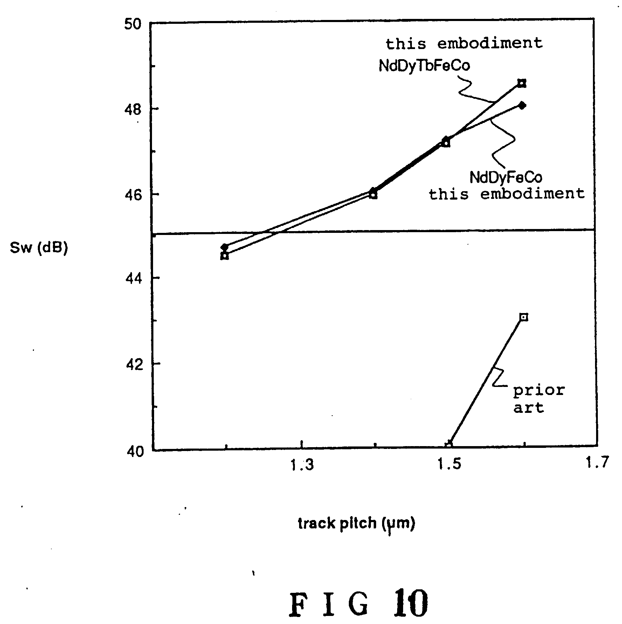

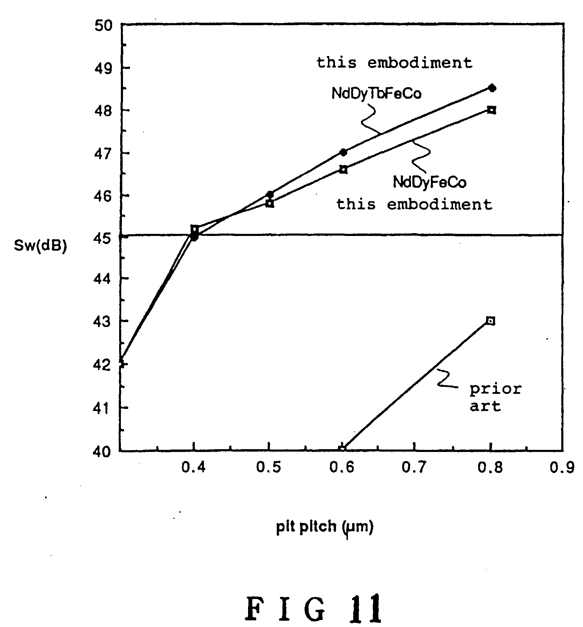

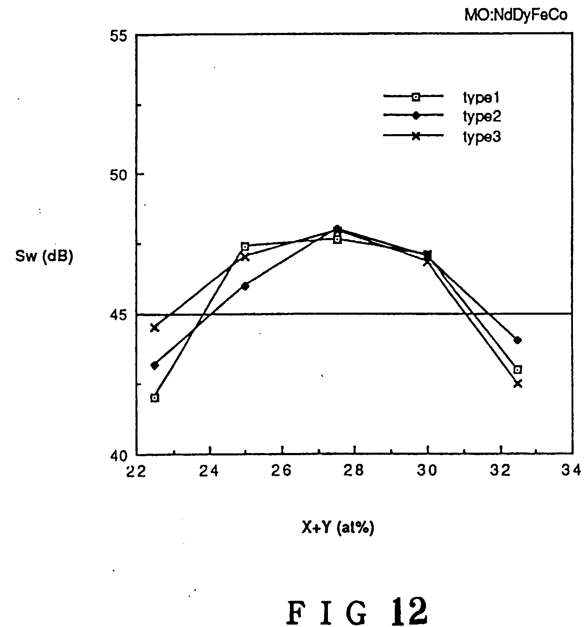

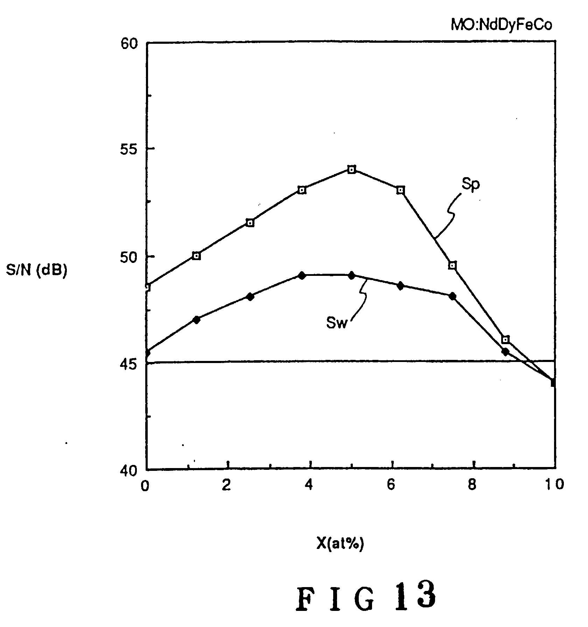

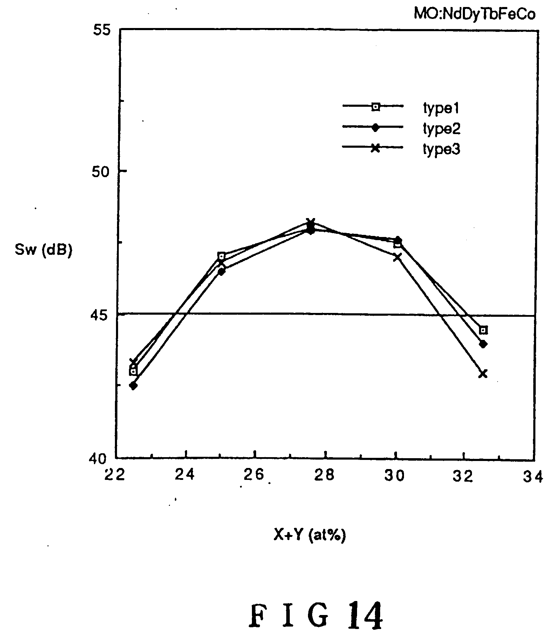

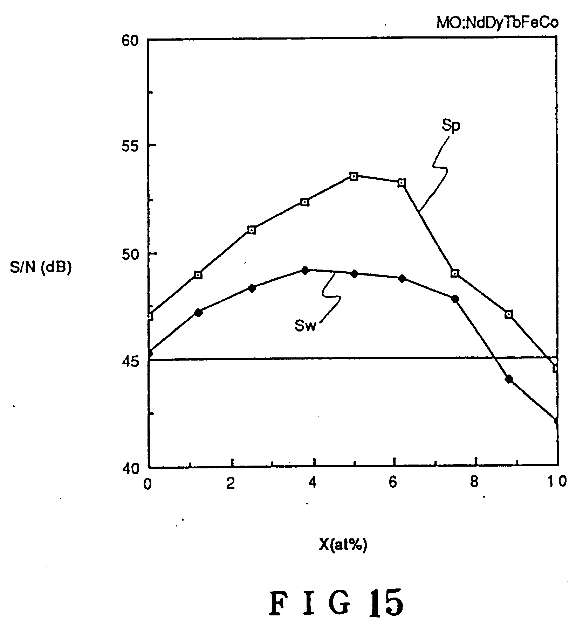

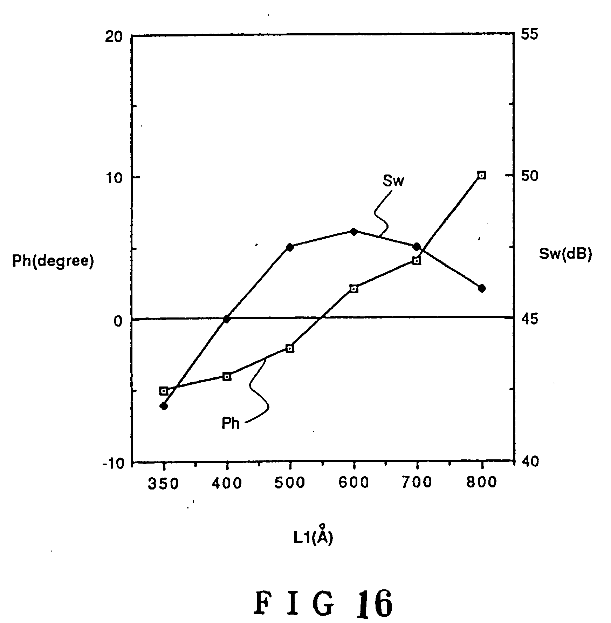

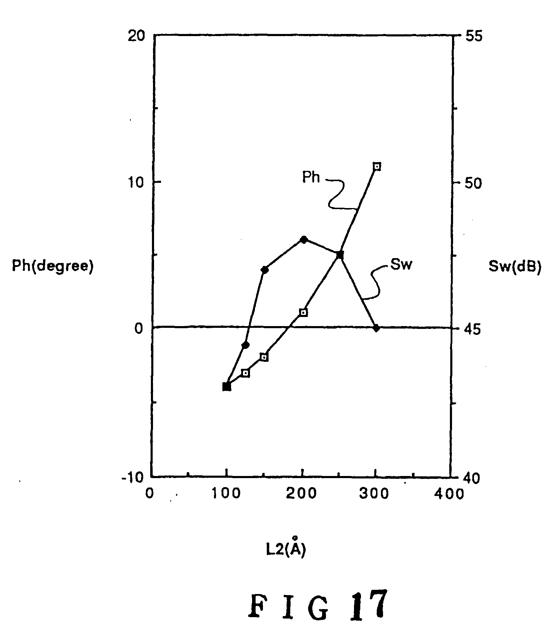

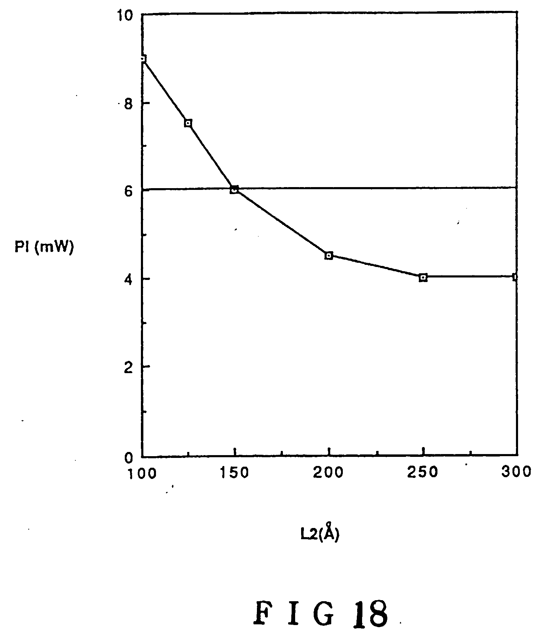

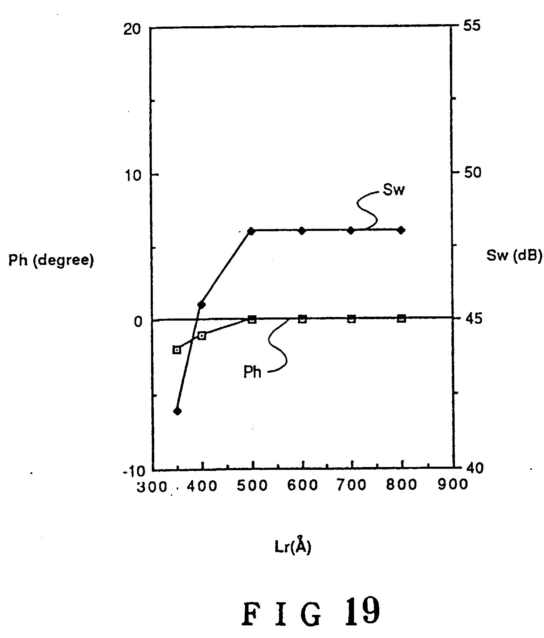

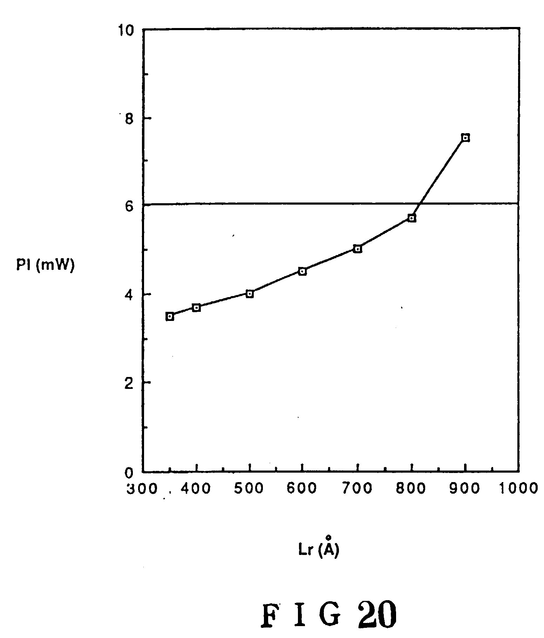

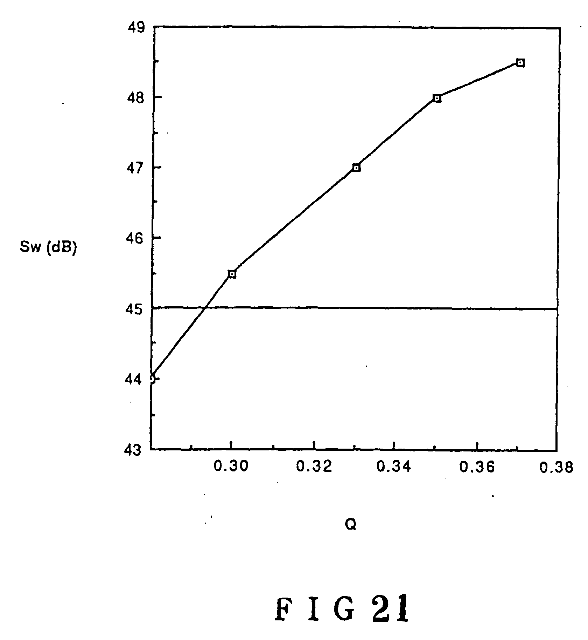

Figure 1 is a side surface sectional diagram of an embodiment of the magneto-optical media according to the present invention; Figure 2 is a diagram for showing the change of the refractivity versus the film thickness of AlSiN; Figure 3 is a diagram for showing the change of refractivity versus the film thickness of A1; Figure 4 is a diagram for showing an embodiment of the most suitable calculation of the film constitution; Figure 5 is a diagram for showing the change of the S/N ratio of the magneto-optical media according to the present invention versus the fluctuation of the phase difference of the mass production use magneto-optical heads; Figure 6 is a diagram for showing the change of the S/N ratio of the magneto-optical media according to the conventional technology versus the fluctuation of the phase difference of the mass production use magneto-optical heads; Fig. 7 is a diagram for showing the change of the S/N ratio in the case when the magneto-optical media produced by the conventional technology has been read by changing the phase difference of the magneto-optical head at the environmental temperature of 25° C and 55° C ; Fig. 8 is a diagram for showing the change of the S/N ratio in the case when the magneto-optical media produced by making the recording layer as NdDyFeCo on the basis of the present embodiment 2 is read by changing the phase difference of the magneto-optical head at the environmental temperature of 25°C, 40°C and 55°C; Fig. 9 is a diagram for showing the change of the S/N ratio in the case when the magneto-optical media produced by making the recording layer as NdDyTbFeCo on the basis of the present embodiment 2 is read by changing the phase difference of the magneto-optical head at the environmental temperature of 25°C, 40°C and 55°C ; Fig. 10 is a diagram for showing the minimum S/N ratio S$\omega$ in the phase difference between $\pm$ 15 degrees in the case when the track pitch of the magneto-optical media has been changed in the conventional technology and the present embodiment 2 ; Fig. 11 is a diagram for showing the change of the minimum S/N ratio S$\omega$ in the phase difference between $\pm$ 15 degrees in the case when the interval of the shortest recording pit pitch of the magnet optical media has been changed in the conventional technology and the present embodiment 2 ; Fig. 12 is a diagram for showing the change of the minimum S/N ratio S$\omega$ in the phase difference between $\pm$ 15 degree in the case when the composition ratio x + y (at%) of the rare earths contained in the recording film has been changed in the thin film constituting types 1, 2, and 3 of the present embodiment 3 in which NdDyFeCo has been used ; Fig. 13 is a diagram for showing the change of the minimum S/N ratio S$\omega$ in the phase difference between $\pm$ 15 degrees and showing the S/N ratio $S_p$ in the phase difference 0 degree in the case when the composition ration x (at%) of Nd contained in the recording film has been changed in the thin film constituting types 1, 2, and 3 of the present embodiment 3 in which NdDyFeCo has been used ; Fig. 14 is a diagram for showing the change of the minimum S/N ratio S$\omega$ in the phase difference between $\pm$ 15 degree in the case when the composition ratio x + y (at%) of the rare earths contained in the recording film has been changed in the thin film constituting types 1, 2, and 3 of the present embodiment 3 where NdDyFeCo has been used ; Fig. 15 is a diagram for showing the change of the minimum S/N ratio $S_w$ in the phase difference between $\pm$ 15 degrees and showing the S/N ratio $S_p$ in the phase difference of 0 degree in the case when the composition ratio x (at%) of Nd contained in the recording film has been changed in the thin film constituting types 1, 2, and 3 of the present embodiment 3, where NdDyFeCo has been used ; Fig. 16 is a diagram for showing the change of the phase difference $P_h$ which gives the peak S/N ratio and the minimum S/N ratio $S_w$ in the phase difference between $\pm$ 15 degrees in the case when the thickness $L_1$ of the first protective film has been changed in the present embodiment 4; Fig. 17 is a diagram for showing the change of the phase difference $P_h$ which gives the peak S/N ratio and showing the minimum S/N ratio of $S_w$ between $\pm$ 15 degrees in the case when the thickness $L_2$ of the second protective film has been changed in the present embodiment 5; Fig. 18 is a diagram for showing the change of the laser power $P_1$ when the S/N ratio has reached 45 dB in the case when the thickness $L_2$ of the second protective film has been changed in the present embodiment 5; Fig. 19 is a diagram for showing the change of the phase difference $P_h$ which gives the peak of S/N ratio and showing the minimum S/N ratio Sw between $\pm$ 15 degrees in the case when the thickness $L_r$ of the reflecting film has been changed in the present embodiment 6; Fig. 20 is a diagram for showing the change of the laser power $P_1$ when the S/N ratio has reached to 45 dB in the case when the thickness $L_r$ of the reflective film has been changed in the present embodiment 6; Fig. 21 is a diagram for showing the relationship between Q and $S_w$ in the present embodiment 7.

1 transparent substrate,
2 first protective layer,
3 second protective layer,
4 recording layer,
5 reflecting layer,
6 adhesion layer,

[ Embodiment 1 ]

In the following, explanation will be given in detail on an embodiment of the magneto-optical disk according to the present invention by referring to drawings.

Fig. 1 is a side surface sectional diagram of an embodiment of the magneto-optical disk according to the present invention.

In Fig. 1, numeral 1 denotes a transparent substrate such as that made of glass, acrylic resin, PC (polycarbonate) resin, etc., and the thickness thereof is about 1.2 mm. Numerals 2 and 3 denote transparent thin films formed of AlSiN (aluminium silicon nitride), used as a protective layer. Numeral 4 denotes a magnetic thin film which easily magnetisable axis is perpendicular to the film surface, it is made of NdDyFeCo, TbFeCo, DyFeCo, etc., and is as a recording layer. Numeral 5 denotes a reflecting layer made of A1. Numeral 6 denotes an adhesive layer made of epoxy resin, hot melt adhesive agent, etc., and for pasting two counterposing magneto-optical disks together. The refractivity of the above-described substrate 1 is 1.5, and the protective layer consisting of AlSiN has refractivity for depending to the film thickness as shown in Fig. 2. The reflecting layer 5 consisting of Al has the refractivity which is depend on film thickness as shown in Fig. 3. The light impinged from the substrate 1 passes through the protective layer 2, and the component reflecting in the interface to the recording layer 4 and the component which transpares the recording layer 4 and the protective layer 3 and reflects at the reflecting layer 5 interferes to each other, and the Kerr rotation angle increases. The laser wavelength of the light source in the present embodiment is 825 nm. The result of calculation of the reflectivity (R), phase difference ($\delta$), and characteristic index (Q) in the various recording film thickness under the above described conditions are as shown in Fig. 4. Although the optimization of the film constitution is devised by repeating the calculation such as described above, it must be also noticed to preserve a suitable reflectivity, protecting effect, and recording sensitivity.

As an example of the film constitution devised to be subjected to such optimization as described above, an magneto-optical media was formed, in which the constitution is such that the substrate 1 is made of PC resin having the thickness of 1.2 mm, the thickness of the protective layer 2 consisting of AlSiN is between 400 Å and 700 Å, the thickness of the recording layer consisting of NdDyFeCo is between 250 Å and 300 Å, the thickness of the protective layer 3 consisting of AlSiN is between 200 Å and 300 Å, and the thickness of the reflecting layer 5 consisting of A1 is between 500 Å and 700 Å. Here, the reason why AlSiN was used as the protective layer is that it is more excellent than SiN and $SiO_2$ in respect of the protecting effect and heat conducting characteristics. The reason why NdDyFeCo was used as a recording layer is that the read characteristics is equal to those of TbFeCo, and moreover, recording can be carried out at a lower magnetic field than that of TbFeCo, and is cheap.

It is said that the magneto-optical heads have the phase difference between the polarized light ( P polarized light ) in the same direction as that of the impinging polarized light and the polarized light ( S polarized light ) perpendicularly intersecting to the P polarized light and it is at worst about + 15 degrees, and even in the range of the fluctuation of this magneto-optical head, the high S/N ratio of the. magneto-optical disk must be guaranteed. Therefore, in the magneto-optical disk having the above-described constitution, a babinet soleile plate was combined in the interior of an actual magneto-optical head to let it have intentionally phase difference, and to measure the S/N ratio, and the result is shown in Fig. 5. In Fig. 5, the abscissa shows the phase difference due to the babinet soleile plate, and the ordinate shows the S/N ratio at that time. The peak position of the S/N ratio is present just at the position where the phase difference is at 0 degree, and even if the internal phase difference of the massproduction use magnetic-optical head is present for about ± 15 degrees, a sufficient S/N ratio can be obtained. In Fig. 6, the result of the same experiment on the magnetic-optical disk which has the film constitution designed by the conventional technology is shown. In Fig. 6, when the internal phase difference of the magnetic-optical head is in the range of 0 degree or + 15 degree, a sufficient S/N ratio can be obtained, but when it is an magnetic-optical head having internal phase difference of - 15 degree, a sufficient S/N ratio can not be obtained.

[ Embodiment 2 ]

In an actual magneto-optical drive, there is such one in which the internal temperature at the time of operation reaches to 50°C to 60°C due to the heat evolution of the circuit and the coil of the actuator. Under such a high temperature as described above, the phase difference of the magneto-optical media changes due to the influence of the birefringent of the substrate. Therefore, an magneto-optical media should be designed optically in such a manner as that the phase difference is at 0 degree even under a high temperature. Fig. 7 shows the result of measurement of the S/N ratio of the magneto-optical media designed by the conventional technology by combining a babinet soleile plate in the inside of the magneto-optical head to let it intentionally have the phase difference. Although the peak position of the S/N ratio is at the phase difference of 10 degree at 25°C, but the peak of the S/N ratio has shifted to 35 degree at 55°C, Therefore, a film must be designed in consideration of the amount of peak shift at the time of high temperature. That is, in order that the peak of the S/N ratio is at the phase difference of 0 degree at the time of high temperature, the peak of the S/N ratio at 25°C is previously set in the minus side in the phase difference in such a manner as to offset the shift in the time of high temperature. It can be seen by referring to Fig. 4, that it will do to make the film thickness of the recording film be less than 250 Å. However, from Fig. 4, it is not preferable that the characteristic index Q becomes markedly lowered when the film thickness of the recording film becomes lower than 125 Å. Also, the thickness of respective layers must be optimized to preserve suitable reflectivity, protective effect, and recording sensitivity.

As an example of the film constitution optimized by considering the phase difference under high temperature, as shown in Fig. 1, an magneto-optical media was formed , in which the constitution was such that the substrate 1 was made of PC resin having the thickness of 1.2 mm, the thickness of the protective layer 2 consisting of AlSiN is between 400 Å and 700 Å, the thickness of the recording layer 4 consisting of NdDyFeCo between 125 Å and 250 Å, the thickness of the protective layer 3 consisting of AlSiN between 150 Å and 250 Å, and the thickness of the reflecting layer 5 consisting of A1 between 400 Å and 800 Å. In Fig. 8, was shown the S/N ratio when the magneto-optical media of the present embodiment 2 has been read by changing the phase difference in the magneto-optical head. The environmental temperature at the time of reading is taken to be variable in the range from 25°C to 55°C. At 55°C it is known that the peak position of the S/N ratio corresponds to the phase difference of 0 degree in this embodiment. Moreover, in the range From -15 degree to + 15 degree which is the phase difference fluctuation of the magneto-optical head having the mass produced drive, S/N ratio is above the 45dB required as the enough signal quality. Also, when the environmental temperature is in the rangefrom 25°C to 55°C, it is known that more than 45 dB is always obtained as S/N ratio in the range from - 15 degree to + 15 degree as the phase difference fluctuation of the magneto-optical head. Here, the reason why AlSin has been used as a protective layer is that it is more excellent than SiN and $SiO_2$ in the points of the protective effect and the heat conductive characteristics. The reason why NdDyFeCo was used as the recording layer is that the same Kerr read out characteristics as those of TbFeCo can be obtained, and moreover, it can record in a lower magnetic field than that of TbFeCo, and is cheap.

By the way, even if the recording layer is made of NdDyTbFeCo, the same effect can be obtained. As shown in Fig.1, an magneto-optical media was formed, which had such constitution that the substrate 1 is made of PC resin 1.2 mm thick, the thickness of the protective layer 2 consisting of AlSiN between 400 Å and 700 Å, the thickness of the recording layer 4 consisting of NdDyTbFeCo between 125 Å and 250 Å, the thickness of the protective layer consisting of AlSiN between 150 Å and 250 Å, and the thickness of the reflecting layer consisting of Al between 400 Å and 800 Å. In Fig. 9 was shown the S/N ratio in the case when the magneto-optical media of the present embodiment 2 has been read by changing the phase difference of the magneto-optical head. It is shown that, in the temperature range from 25°C to 55°C, the S/N ratio 45 dB is obtained in the range of phase difference of the magneto-optical head from + 15 degree to - 15 degree.

By the way, even if the magneto-optical recording film is made of any of NdDyFeCo or NdDyTbFeCo, the same effect as that in the present embodiment 2 can be obtained when the reflecting film has been made of an aluminium alloy such as AlTi, AlCr, AlTa, etc.

The maximum memory capacity which can be contained in one disk is determined by the density of the recording bits. Therefore, when the recording density has been increased, the excellency of the above-described present embodiment over the conventional technology is shown.

In Fig. 10 is shown the change of the S/N ratio in the case when the recording density has been increased in the radial direction of the disk. The track pitch was shortened in order to increase the recording density. The disk is a single plate in order to realize the overwriting of the magnetic field modulation system. The interval of the recording bits is 0.76 micron. Recording is carried out at the linear velocity of 20 m/sec, with the laser power of 7 mW and under a bias magnetic field of 150 Oe by the magnetic field modulation. The recording and reading was carried out under the environment of 55°C. In Fig. 10, Sw, the minimum S/N ratio within ± 15 degrees is taken in the ordinate. As is clear from Fig. 10, even the media of the present embodiment has a track pitch of 1.2 micron, more than 45 dB can be obtained within ± 15 degrees of the fluctuation of the phase difference owned by the head.

Fig. 11 shows the change of the S/N ratio in the case when the recording density has been increased in the tangential direction of the disk. In order to increase the recording density, the pitch of the shortest pit is shortened. The track pitch at this time is 1.6 microns. The disk is a single plate in order to realize the overwriting of the magnetic field modulation system. The recording is carried out at the linear velocity of 20 m/sec, with the laser power of 7 mW, and under the bias magnetic field of 150 Oe by the magnetic field modulation. Recording and reading was carried out under the environment of 55°C. In Fig. 11, Sw, the minimum S/N ratio within ± 15 degrees is taken in the ordinate.

Fig. 11 shows that the media of the present embodiment enables us to get more than 45dB as S/N ratio under the condition of p 0.4 micron pit pitch.

From the above-described Figs. 10 and 11, it is known that the media of the present embodiment has excellency in comparison with the media of the conventional technology in the view point of improving the recording density.

In the present embodiment 2, AlSiN for constituting the protective layers 2 and 3 has the refractivity between 1.95 and 2.05, and when it is represented as:

$(Al_x Si_{100-x})N$

it will do when the following relation is satisfied:

$$0 \text{ at}\% \leqq x \leqq 95 \text{ at}\%.$$

More preferable composition range is as follows :

$$10 \text{ at}\% \leqq x \leqq 50 \text{ at}\%.$$

[ Embodiment 3 ]

The thin film multilayer structures of the magneto-optical media is fixed to the three types as shown in Table 1, and in respective cases, the compositions of the recording layers are changed. These compositions are laminated on a transparent substrate in such an order as at first the protective film and recording film, and at second as the protective film and reflecting film.

However, the first protective film and the second protective film are both the ones made of AlSiN.

Table 1

|  | Type 1 | Type 2 | Type 3 |
|---|---|---|---|
| First protective film | 600 | 600 | 600 |
| Recording film | 150 | 180 | 220 |
| Second protective film | 200 | 200 | 200 |
| Reflecting film | 600 | 600 | 600 |
| The unit is in Å. | | | |

Signals are written and read in the magneto-optical media which are produced in such a manner as described above.

In read process, the phase difference owned by the head is intentionally shifted from 0 degree by use of the babinet soleile plate composed in the inside of the magneto-optical head. When the composition of the recording layer is represented as follows:

$Nd_x Dy_y (FeCo)_{100-x-y}$,

and the relationship between the value of the composition ratio X + Y of rare earths and the minimum S/N ration $S_w$ within ± 15 degrees which is the phase difference of the head at the environmental temperature of 55°C is shown in Fig. 12.

When there is such a relation as :

$$25 \text{ at}\% \leqq x + y \leqq 30 \text{ at}\%,$$

even if the structure is in any type of Table 1, $S_w$ is made more than 45 dB.

Also, the relationship between the value of x in the case when x + y is 28 at% and the S/N ratio $S_p$ at the phase difference of the head of 0 degree was shown in Fig. 13. The environmental temperature is 55°C. In Fig. 13, the minimum S/N ratio $S_w$ within ± 15 degrees of the head is also shown. From Fig. 13, it is known that when there is the relationship :

$$0 \text{ at}\% \leqq X \leqq 8 \text{ at}\%,$$

the S/N ratio of more than 45 dB is assured in the range of ± 15 degrees. This range of x holds good in the range where x + y is between 25 at% and 30 at%.

When the composition of the recording layer can be represented as :

$Nd_x (Dy\ 0.74\ Tb\ 0.26)_y (FeCo)_{100-x-y}$,

the relationship between the value of composition ratio x + y of rare earths and the minimum S/N ratio $S_w$ within the phase difference of the head of + 15 degrees at the environmental temperature of 55°C is shown in Fig. 14.

When there is the relation such as :

$$25 \text{ at}\% \leqq x + y \leqq 30 \text{ at}\%,$$

in any type of the structure of Table 1, Sw is made more than 45 dB.

Also, in the case when x + y is made as 28 at%, the relationship between the value of x and the S/N ration $S_p$ at the phase difference of the head of 0 degree was shown in Fig. 15. The environmental temperature is 55°C. In Fig. 15, the minimum S/N ratio $S_w$ within ± 15 degrees which is the phase difference of the head is also shown.

From Fig. 15, it is known that, when there is such a relationship as :

$$0 \text{ at}\% \leqq x \leqq 8 \text{ at}\%,$$

the S/N ratio of more than 45 dB is assured in the range of ± 15 dgrees. This range of x holds good in the range of x + y of more than 25 at% and less than 30 at%. Here, the ratio between Dy and Tb may be arbitrary.

Here, when the ratio of Fe and Co is represented as :

$Fe_{1-z}Co_z$

the present embodiment 3 holds good, when there is such a relationship as : $0.07 \leqq z \leqq 0.43$

[ Embodiment 4 ]

On a transparent substrate, an magneto-optical media is produced by laminating the first protective film for $L_1$ Å, a recording film for 170 Å, the second protective film for 200 Å, and a reflecting film for 600 Å. However, the first and second protective films are made of AlSiN, SiN, or $SiO_2$ having the refractivity between 1.95 and 2.05. Further, the recording film is made of NdDyFeCo or NdDyTbFeCo. Also, the reflecting film is made of AlTi, AlCr, or AlTa. The phase of the magneto-optical head is changed to read the magneto-optical media by using the babinet soleile plate composed in the inside of the magneto-optical head. The environmental temperature is set at 55°C. The phase of the head where the S/N ratio of the read signals show the peak is made as the phase $P_h$ which is owned by the magneto-optical media itself at the environmental temperature thereof. Also, the value of the lowest S/N ratio within ± 15 degrees is made as $S_w$. The relationship between the thickness $L_1$ of the first protective film and $P_h$ and $S_w$ is shown in Fig. 16. From Fig. 16, it is known that $P_h$ can be restrained to be within + 15 degrees, and $S_w$ becomes more than 45 dB, when $L_1$ is between 400 Å and 700 Å.

[ Embodiment 5 ]

An magneto-optical media is produced by laminating on a transparent substrate the first protective film for 600 Å, a recording film for 170 Å, the second protective film for $L_2$ Å, and a reflecting film for 600 Å. However, the first and second protective films, are made of AlSiN, SiN, or $SiO_2$ having the refractivity between 1.95 and 2.05. Further, the recording film is made of NdDyFeCo of NdDyTbFeCo. Also, the reflecting film is made of AlTi, AlCr, or AlTa. The magneto-optical media is read by changing the phase of the magneto-optical head by use of the babinet soleile plate composed in the inside of the magneto-optical head. The environmental temperature is set at 55°C. The phase of the head for showing the peak of the S/N ratio of the read signals is made as the phase $P_h$ which is owned by the magneto-optical media itself at that environmental temperature. Also, the value of the lowest S/N ratio within ± 15 degrees owned by the magneto-optical head is denoted as $S_w$. At this time, the relationship between the thickness L2 of the second protective film and Ph and $S_w$ is shown in Fig. 17. From Fig. 17, it is known that $P_h$ can be restrained within ± 15 degrees, when $L_2$ is less than 250 Å, and that $S_w$ becomes more than 45 dB.

Next, the relationship between the thickness $L_2$ of the second protective film and the recording laser power $P_1$ at the time where the S/N ratio reaches to 45 dB. The linear velocity at the time of recording is 15 m/sec. At this time, the phase difference of the magneto-optical head is set at 0 degree, and the environmental temperature at 55°C. In Fig. 18, $L_2$ is taken on the abscissa, and $P_1$ on the ordinate. From Fig. 18, it is known that $P_1$ can be restrained to be less than 6 mW, when $L_2$ is more than 150 Å, and that the signals can be effectively recorded with low laser power.

[ Embodiment 6 ]

An magneto-optical media is produced by laminating on a transparent substrate the first protective film for 600 Å, a recording film for 170 Å, the second protective film for 200 Å, and a reflecting film for $L_r$ Å. However, the first and second protective films are made of AlSiN, SiN, or $SiO_2$ having the refractivity between 1.95 and 2.05. Further, the recording film is made of NdDyFeCo or NdDyTbFeCo. Also, the reflecting film is made of AlTi, AlCr, or AlTa. The magneto-optical media is read by changing the phase of the magneto-optical head by the use of the babinet soleile plate composed in the inside of the magneto-optical head. The environmental temperature is set at 55°C. The phase of the head where the S/N ratio of the read signals shows the peak is made as the phase $P_h$ which the magneto-optical media itself owns in the environmental temperature thereof. Also, the value of the lowest S/N ratio within ± 15 degrees owned by the magneto-optical head is made as $S_w$. The relationship between the thickness $L_r$ of the reflecting film and $P_h$ and $S_w$ is shown in Fig. 19. From Fig. 19, it is known that $P_h$ can be restrained within ± 15 degrees, when $L_r$ is more than 400 Å, and that $S_w$ becomes more than 45 dB.

Next, the relationship between the thickness $L_r$ of the reflecting film and the recording laser power $P_1$ at the time when the S/N ratio reached 45 dB is shown. The linear velocity at the time of recording is 15 m/sec. At this moment, the phase difference of the optical head is set at 0 degree, and the environmental temperature at 55°C. In Fig. 20, $L_r$ is taken on the abscissa, and $P_1$ is taken on the ordinate. From Fig.20, it is known that $P_1$ can be restrained below 6 mW, when $L_r$ is less than 800 Å, and that magneto-optical signals can be effectively recorded with a low laser power.

[ Embodiment 7 ]

An magneto-optical media is constituted by arranging on a transparent substrate the first protective layer, an magneto-optical recording layer, the second protective layer, and a reflecting layer successively. In the constitution where the light is impinged from the above-described transparent substrate to the above-described recording layer and the above-described reflecting layer, the Kerr rotation angle of the kerr effect reproduced light is denoted by $\theta$, Kerr elliptic ratio $\varepsilon$, reflectivity R (%), and the phase difference between the impinging polarized light surface and the light in the direction for perpendicularly intersecting the impinging polarised light surface by $\delta$ and there are assumed the following relationship :

$$\delta = ARCTAN(\varepsilon/\theta)$$

$$Q = |R*SIN\theta*COS2\delta|$$

Also, in case when the phase difference of the magneto-optical head has been changed within ± 15 degrees, the lowest S/N ratio is denoted as $S_w$. Here, ± 15 degrees corresponds to the maximum value of the phase difference fluctuation owned by the mass produced drive.

Fig. 21 is a diagram for showing the relationship between Q and $S_w$. From Fig. 21, it is known that the S/N ratio of more than 45 dB, which is capable of stable recording and reading in the mass produced drive, also can be obtained, when Q is more than 0.3.

[ Performance ]

In the signal detecting system of the magneto-optical head, the phase difference $\delta$ between the impinged polarized light direction (P polarized light) and the direction (S polarised light) perpendicular to the impinging polarised light direction is an amount which is related with the Kerr rotation angle $\theta$ and the Kerr ellipticity $\varepsilon$, and can be represented as follows :

$$\delta = \text{ARCTAN} ( \varepsilon/\theta ).$$

The smaller the $\varepsilon$ is for $\theta$, the nearer becomes the $\delta$ to 0. On the other hand, the reproduced S/N ratio of the magneto-optical media is an amount proportional to log Q,
and Q itself can be represented as :

$$Q = | R*SIN\theta*COS2\delta |$$

That is, even if the Kerr rotation angle of a certain size has been obtained, when the Kerr ellipticity has already become large, the phase difference $\delta$ is generated in the inside of the magneto-optical media, and decreases index Q, and further, lowers the S/N ratio.

Therefore, in order to obtain high S/N ratio, it will do that the refractivity and film thickness of the respective layers of the multilayered thin film of the magneto-optical media are optimized to achieve the large $\theta$ and the small $\varepsilon$. It is also necessary to consider that the each layer has the optimum protective characteristics and heat conducting characteristics. Especially, when the high density recording is considered, in order to stably obtain a high S/N ratio even with micro recording pits, the medium design as shown above becomes necessary.

Utilization Possibility in Industry

As described above, according to the present invention, even if the magneto-optical head of the mass production type has the fluctuation of the phase difference of about $\pm$ 15 degrees, the S/N ratio, which is sufficiently high as not to become practically a problem in the range where the temperature in the drive becomes from 25° to 60°C, can be assured.

Especially, according to the present invention, a S/N ratio which is sufficiently high not to become a problem practically, even if the signals are recorded and read in high density, can be assured.

Also, even in the case when a resin substrate such as polycarbonate, etc. in which the phase difference is present, is used in the transparent substrate, the phase difference as the magneto-optical media can be made 0 degrees by optimising the film constitution and film composition according to the present invention. Thus, the present invention has such advantages as to be able to supply a magneto-optical media which is cheap but has a high S/N ratio, and is capable of high density recording.

**Claims**

1.  A magneto-optical medium for use in a magneto-optical drive comprising a first protective layer (2), a recording layer (4), a second protective layer (3), and a reflecting layer (5) on a transparent substrate (1) for carrying out recording and reading of incident light on said recording layer and said reflecting layer, of said transparent substrate, characterised in that the first protective layer has a thickness of between 40nm (400Å) and 70nm (700Å), the recording layer has a thickness of between 12.5nm (125Å) and 30nm (300Å), the second protective layer has a thickness of between 15nm (150Å) and 30nm (300Å) and the reflective layer has a thickness of between 40nm (400Å) and 80nm (800Å), the composition of the recording layer is one selected from among DyFeCo, TbFeCo, DyTbFeCo, NdTbFeCo, NdDyFeCo and NdDyTbFeCo, and Q is more than 0.3 and the absolute value of $\delta$ is less than 5 degrees in the following two equations :

$$\delta = \text{ARCTAN} (\varepsilon/\theta),$$

and

$$Q = IR \times SIN\ \theta \times COS\ 2\ \delta I$$

wherein $\theta$ is the Kerr rotation angle of the read-out light by the Kerr effect,

$\epsilon$ is the Kerr elipticity,

$R(\%)$ the reflectivity, and

$\delta$ the phase difference generated in the medium between a plane of polarisation of the incident light and the component perpendicular to said plane of polarisation of the incident light at a temperature Td of the medium which lies in the range $25°C \leq Td \leq 60°C$.

2. A magneto-optical medium as claimed in Claim 1, wherein the composition of the recording layer is:-

$$Nd_x(Dy_vTb_{1-v})_y(FeCo)_{100-x-y}$$

where

$$25at\% \leq x+y \leq 30at\%$$

$$0at\% \leq x \leq 8at\%$$

$$0 \leq v \leq 1$$

3. A magneto-optical medium as claimed in Claim 1, wherein the composition of the recording layer is:-

$$Nd_xDy_y(Fe_{1-z}Co_z)_{100-x-y}$$

where

$$25at\% \leq x+y \leq 30at\%$$

$$0at\% \leq x \leq 8at\%$$

$$0.07 \leq z \leq 0.43$$

4. A magneto-optical medium as claimed in Claim 1, wherein the composition of the recording layer is:-

$$Nd_x(DyTb)_y(Fe_{1-z}Co_z)_{100-x-y}$$

where

$$25at\% \leq x+y \leq 30at\%$$

$$0at\% \leq x \leq 8at\%$$

$$0.07 \leq z \leq 0.43$$

5. A magneto-optical medium as claimed in any preceding Claim, wherein the first and seconds protective layers are constituted of dielectric having a refractive index of between 1.95 and 2.05.

6. A magneto-optical medium as claimed in Claim 5, wherein the dielectric is AlSiN.

7. A magneto-optical medium as claimed in Claim 5, wherein the dielectric is SiN.

8. A magneto-optical medium as claimed in Claim 5, wherein the dielectric is $SiO_2$.

**Patentansprüche**

1. Magnetooptisches Medium zur Verwendung in einem magnetooptischen Laufwerk, umfassend eine erste Schutzschicht (2), eine Aufzeichnungsschicht (4), eine zweite Schutzschicht (3) sowie eine reflektierende Schicht (5) auf einem transparenten Substrat (1) zum Durchführen einer Aufzeichnung und eines Lesens von einfallendem Licht auf der Aufzeichnungsschicht und der reflektierenden Schicht des transparenten Substrats, **dadurch gekennzeichnet**, daß die erste Schutzschicht eine Dicke zwischen 40 nm (400 Å) und 70 nm (700 Å) aufweist, die Aufzeichnungsschicht eine Dicke zwischen 12,5 nm (125 Å) und 30 nm (300 Å) aufweist, die zweite Schutzschicht eine Dicke zwischen 15 nm (150 Å) und 30 nm (300 Å) aufweist und die Reflexionsschicht eine Dicke zwischen 40 nm (400 Å) und 80 nm (800 Å) aufweist, wobei die Zusammensetzung der Aufzeichnungsschicht gewählt ist aus DyFeCo, TbFeCo, DyTbFeCo, NdTbFeCo, NdDyFeCo und NdDyTbFeCo, und wobei in den folgenden zwei Gleichungen Q größer als 0,3 ist und der Absolutwert von $\delta$ kleiner als 5 Grad ist:

$$\delta = \text{ARCTAN} (\varepsilon/\theta),$$

und

$$Q = |R \times \text{SIN } \theta \times \text{COS } 2 \, \delta \, |,$$

wobei $\theta$ der Kerr-Drehwinkel des Ausleselichts beim Kerr-Effekt ist, $\varepsilon$ die Kerr-Elliptizität ist, R(%) das Reflexionsvermögen ist und $\delta$ die Phasendifferenz ist, die im Medium zwischen einer Polarisationsebene des einfallenden Lichts und der Komponente senkrecht zu der Polarisationsebene des einfallenden Lichts bei einer Temperatur Td des Mediums entsteht, welche im Bereich 25°C ≤ Td ≤ 60°C liegt.

2. Magnetooptisches Medium nach Anspruch 1, wobei die Zusammensetzung der Aufzeichnungsschicht
$Nd_x(Dy_vTb_{1-v})_y(FeCo)_{100-x-y}$
ist, wobei

$$25 \text{ Atom-\%} \leq x + y \leq 30 \text{ Atom-\%},$$

$$0 \text{ Atom-\%} \leq x \leq 8 \text{ Atom-\%}$$

und

$$0 \leq v \leq 1.$$

3. Magnetooptisches Medium nach Anspruch 1, wobei die Zusammensetzung der Aufzeichnungsschicht
$Nd_xDy_y(Fe_{1-z}Co_z)_{100-x-y}$
ist, wobei

$$25 \text{ Atom-\%} \leq x + y \leq 30 \text{ Atom-\%},$$

$$0 \text{ Atom-\%} \leq x \leq 8 \text{ Atom-\%}$$

und

$$0,07 \leq z \leq 0,43.$$

4. Magnetooptisches Medium nach Anspruch 1, wobei die Zusammensetzung der Aufzeichnungsschicht
$Nd_x(DyTb)_y(Fe_{1-z}Co_z)_{100-x-y}$

ist, wobei

$$25 \text{ Atom-\%} \leq x + y \leq 30 \text{ Atom-\%},$$

$$0 \text{ Atom-\%} \leq x \leq 8 \text{ Atom-\%}$$

und

$$0{,}07 \leq z \leq 0{,}43.$$

5. Magnetooptisches Medium nach einem der vorangehenden Ansprüche, wobei die erste und die zweite Schutzschicht aus einem Dielektrikum mit einem Brechungsindex zwischen 1,95 und 2,05 gebildet sind.

6. Magnetooptisches Medium nach Anspruch 5, wobei das Dielektrikum AlSiN ist.

7. Magnetooptisches Medium nach Anspruch 5, wobei das Dielektrikum SiN ist.

8. Magnetooptisches Medium nach Anspruch 5, wobei das Dielektrikum $SiO_2$ ist.


**Revendications**

1. Support magnéto-optique destiné à être utilisé dans un lecteur magnéto-optique, comprenant une première couche de protection (2), une couche d'enregistrement (4), une deuxième couche de protection (3) et une couche réfléchissante (5) sur un substrat transparent (1) afin de réaliser l'enregistrement et la lecture de la lumière incidente sur ladite couche d'enregistrement et ladite couche réfléchissante dudit substrat transparent, caractérisé en ce que la première couche de protection a une épaisseur comprise entre 40 nm (400 Å) et 70 nm (700 Å), la couche d'enregistrement a une épaisseur comprise entre 12,5 nm (125 Å) et 30 nm (300 Å), la deuxième couche de protection a une épaisseur comprise entre 15 nm (150 Å) et 30 nm (300 Å) et la couche réfléchissante a une épaisseur comprise entre 40 nm (400 Å) et 80 nm (800 Å), la composition de la couche d'enregistrement étant choisie parmi DyFeCo, TbFeCo, DyTbFeCo, NdTbFeCo, NdDyFeCo et NdDyTbFeCo et Q est supérieur à 0,3 et la valeur absolue de δ est inférieure à 5 degrés dans les deux équations suivantes :

$$\delta = \arctan (\varepsilon/\theta),$$

et

$$Q = |R \times \sin\theta \times \cos 2\delta|$$

où $\theta$ est l'angle de rotation de Kerr de la lumière lue par effet de Kerr, $\varepsilon$ est le rapport d'ellipse de Kerr, R (%) est la réflectivité et $\delta$ est la différence de phase générée dans le support entre un plan de polarisation de la lumière incidente et la composante perpendiculaire audit plan de polarisation de la lumière incidente à une température Td du support comprise dans la plage $25\underline{o}C \leq Td \leq 60\underline{o}C$.

2. Support magnéto-optique selon la revendication 1, dans lequel la composition de la couche d'enregistrement est :
$Nd_x(Dy_vTb_{1-v})_y(FeCo)_{100-x-y}$
où

$$25 \text{ \% atomique} \leq x + y \leq 30 \text{ \% atomique}$$

$$0 \text{ \% atomique} \leq x \leq 8 \text{ \% atomique}$$

$$0 \leq v \leq 1.$$

3. Support magnéto-optique selon la revendication 1, dans lequel la composition de la couche d'enregistrement est :
   $Nd_x Dy_y (Fe_{1-z} Co_z)_{100-x-y}$
   où

$$25 \text{ \% atomique} \leq x + y \leq 30 \text{ \% atomique}$$

$$0 \text{ \% atomique} \leq x \leq 8 \text{ \% atomique}$$

$$0{,}07 \leq z \leq 0{,}43.$$

4. Support magnéto-optique selon la revendication 1, dans lequel la composition de la couche d'enregistrement est :
   $Nd_x (DyTb)_y (Fe_{1-z} Co_z)_{100-x-y}$
   où

$$25 \text{ \% atomique} \leq x + y \leq 30 \text{ \% atomique}$$

$$0 \text{ \% atomique} \leq x \leq 8 \text{ \% atomique}$$

$$0{,}07 \leq z \leq 0{,}43.$$

5. Support magnéto-optique selon l'une quelconque des revendications précédentes, dans lequel la première et la deuxième couches de protection sont constituées d'un diélectrique ayant un indice de réfraction compris entre 1,95 et 2,05.

6. Support magnéto-optique selon la revendication 5, dans lequel le diélectrique est AlSiN.

7. Support magnéto-optique selon la revendication 5, dans lequel le diélectrique est SiN.

8. Support magnéto-optique selon la revendication 5, dans lequel le diélectrique est $SiO_2$.

FIG 1

FIG 2

Thickness of Al film by Taly.

# F I G 3

FIG 4

S／N （dＢ）

45

-15          0          +15

δ（ｄｅｇ）

F I G 5

S／N （dＢ）

45

-15          0          +15

δ（ｄｅｇ）

F I G 6

# F I G 7

F I G 8

FIG 9

F I G 10

FIG 11

F I G 12

F I G 13

F I G 14

FIG 15

F I G 16

F I G **17**

F I G 18

F I G 19

F I G 20

FIG 21